Europäisches Patentamt

European Patent Office

Office européen des brevets

(11) Publication number: **0 188 633**
A1

# EUROPEAN PATENT APPLICATION

(21) Application number: 85100354.1

(22) Date of filing: 15.01.85

(51) Int. Cl.⁴: **A 01 B 5/12**

(43) Date of publication of application: 30.07.86
Bulletin 86/31

(84) Designated Contracting States: DE FR GB IT

(71) Applicant: STAR FARM MACHINERY MFG. CO., LTD.,
No. 1061-2, Kamiosatsu, Chitose-shi Hokkaido (JP)

(72) Inventor: Yamada, Fumiaki, 19-3, 3-chome Jiyugaoka,
Chitose-shi Hokkaido (JP)
Inventor: Iwasa, Junichi, 3-11, 1-chome Inaho-cho,
Chitose-shi Hokkaido (JP)
Inventor: Okawa, Shoichi, 4-2, 2-chome
Megumino-Minami, Eniwa-shi Hokkaido (JP)
Inventor: Kondo, Tetsuhiko, 2019-181, Hinodegaoka,
Chitose-shi Hokkaido (JP)

(74) Representative: LOUIS, PÖHLAU, LOHRENTZ &
SEGETH, Kesslerplatz 1 P.B. 3055, D-8500 Nürnberg
(DE)

(54) Device for preventing lateral deviation movement of tractor in one-way cultivator or harrow.

(57) In the so-called one-way disk cultivator or harrow of the type having a plurality of disks (4) attached to one axle (3) at an angle with respect to the direction of travel of a tractor (T) so that the rotation or forced rotation of disks (4) breaks clods over a plowed soil, a colter (8) is disposed in front of the disk gang so that the thrust in the opposite direction of the thrust exerted to the disk gang is effectively provided so as to cancel the moment produced by the thrust force exerted to the disk gang.

DEVICE FOR PREVENTING LATERAL DEVIATION MOVEMENT

OF TRACTOR IN ONE-WAY CULTIVATOR OR HARROW

## BACKGROUND OF THE INVENTION

The present invention relates to a device for preventing the lateral deviation movement of a tractor in the so-called one-way disk harrow of the type having a plurality of disks attached to an axle or gang bolt at an angle with respect to the direction of travel of the tractor to thereby break clods over the plowed soil or in the recently developed cultivator or plow of the type having a plurality of disks arranged in a manner substantially similar to that described above and adapted to be forced to rotate to thereby plow the uncultivated field.

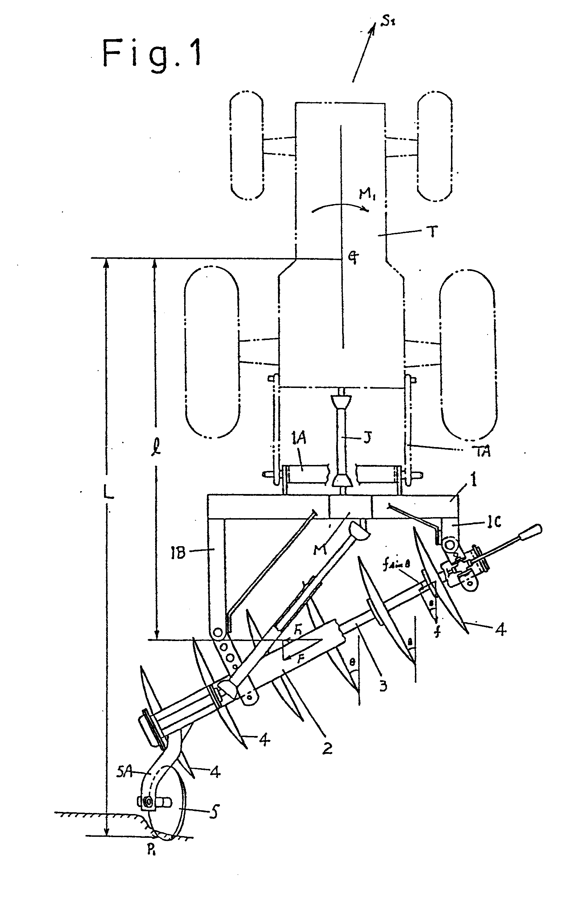

.In such one-way system as described above, the plowed or broken soil is moved in one direction as is well known in the art so that a flat surface of soil can be obtained while, as shown in Fig. 1, each disk 4 has an angle $\theta$ (typically, $10^{\circ} - 20^{\circ}$ in the case of a one-way disk harrow and $20^{\circ} - 35^{\circ}$ in the case of a cultivator) with respect to the direction of travel of the tractor so that the working resistance f is exerted to each disk 4. The thrust force $f \sin \theta$ is exerted to an axle and is in proportion to the number of disks 4. That is, the thrust force F which is the sum of the thrust forces $f \sin \theta$ is exerted to a cultivator or harrow. This total thrust force F is increased especially when the number of disks is large (that is, the plowing or harrowing width is great) or when the disk angle $\theta$ is great and the uncultivated field is hard. It follows therefore that a tractor T for pulling such cultivator or harrow as described above receives a moment $M_1$ about the 0188633 center of gravity G in the direction as indicated by the arrow so that the tractor T cannot move straightly and is forced to move in the direction $S_1$, resulting in various defects in plowing or harrowing. More particularly, a conventional trailing wheel 5 of the cultivator or harrow which cuts into the soil is located at the rear end of the disks 4 and must be made small in diameter otherwise it would interfere in the plowing operation near a furrow. That is, the trailing wheel 5 only cuts the plowed soil shallowly so that the supporting force $P_1$ of the traling wheel 5 is not great. On the other hand, a component $F_1$ of the total thrust F becomes greater as described so that the following relationship is established:

$$F_1 \ell > P_1 L$$

As a result the moment $M_1 = F_1 \ell - P_1 L$ is exerted to the tractor T.

In view of the above, according to the present invention, a colter is disposed in front of a disk gang so that the moment produced by the disks is effectively cancelled, thereby preventing the lateral deviation movement of the tractor.


## BRIEF DESCRIPTION OF THE DRAWINGS

Fig. 1 shows a top view of a tractor and a cultivator or harrow pulled by the tractor;

Fig. 2 is a top view of an embodiment of the present invention;

Fig. 3 is a fragmentary view, on enlarged scale, thereof showing the major component parts thereof; and

Fig. 4 is a front view of Fig. 3.

DETAILED DESCRIPTION OF THE PREFERRED EMBODIMENT

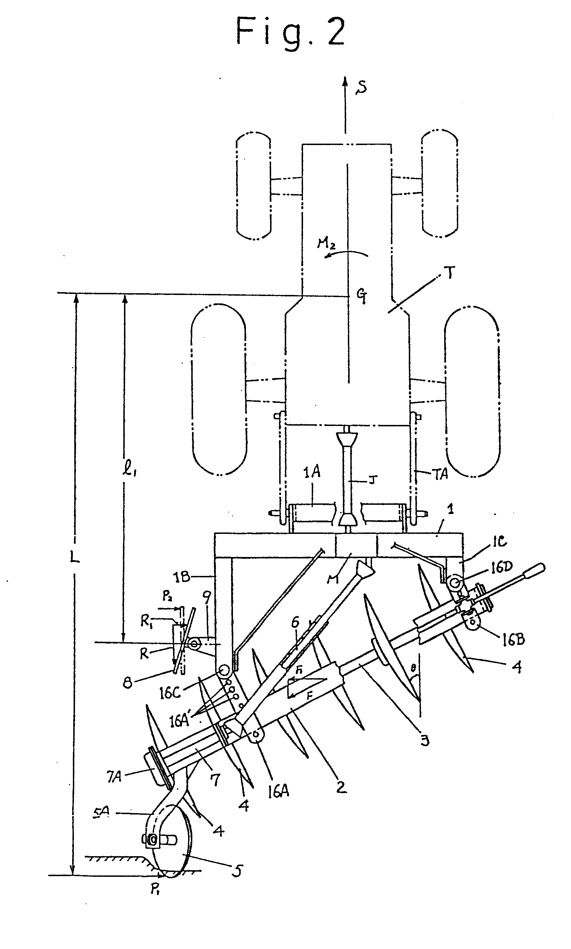

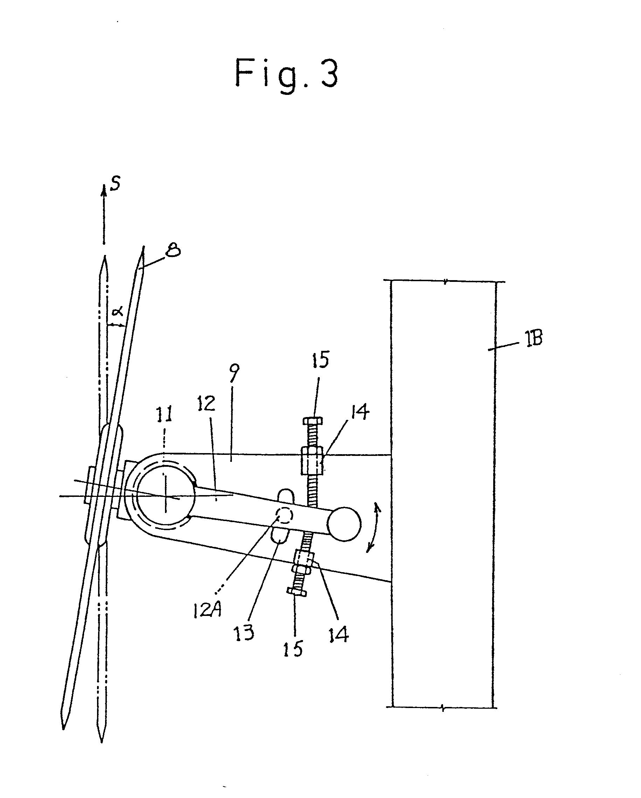

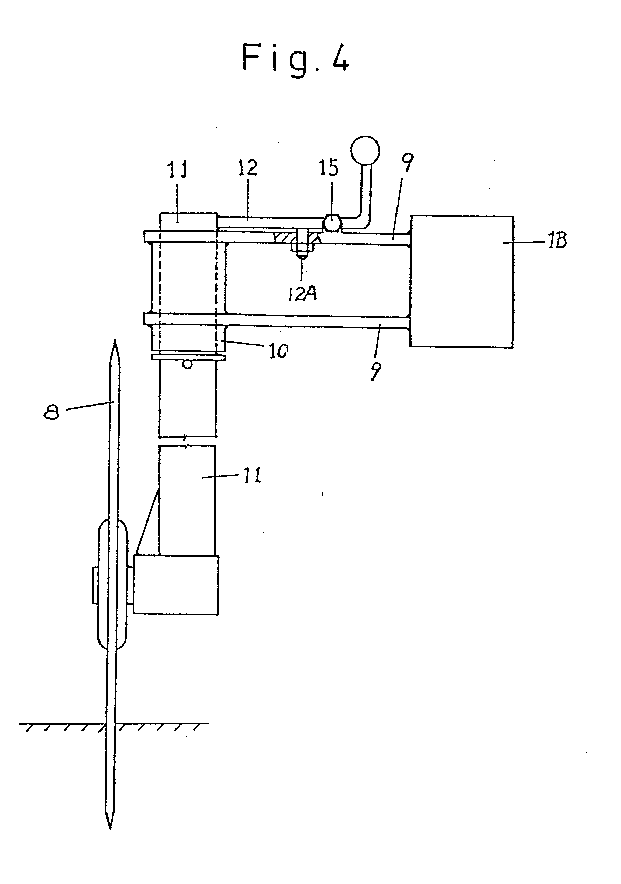

Referring to Figs. 2 - 4, a three-point frame 1A is disposed in front of a main frame 1 and a long supporting frame 1B is extended backwardly from the left end of the main frame 1 while a short supporting frame 1C is extended backwardly from the right end of the main frame 1. A cultivator frame 2 is supported between the rear ends of the supporting frames 1B and 1C at an angle relative to the direction of the travel of the tractor T. A cultivator axle 3 extends in parallel with and immediately below the cultivator frame 2 and carries a plurality of saucer-shaped disks 4 at an angle $\theta$. A trailing wheel 5 for supporting a machine frame is attached to a leg 5A which extends backwardly and to the left from the left end of the cultivator frame 2. The harrow with the above-described construction is pulled by the tractor T over the plowed soil so that the disks 4 rotate to break clods. It is therefore called one-way disk harrow.

A transmission M on the main frame 1 receives the power from the tractor T through a transmission shaft J and the disk 4 is forced to rotate through expandable transmission shafts 6 and 7 a chain power transmission system 7A so that an uncultivated field is plowed. Such structure is a recently developed cultivator or plow. Disposed at a suitable position immediately in front of a disk 4 is a disk colter 8 which can penetrate into an uncultivated filed and the angle between the shaft of the disk colter 8 and the direction of travel is adjustable. More particularly, a bracket 9 extends from the supporting frame 1B and has a

- 3 -

free end from which a bearing 10 is depending. The bearing 10 supports a shaft 11 a lower end of which carries the disk colter 8 rotatably. Securely attached to an upper end of the shaft 11 is an angle adjusting lever 12 for adjusting the angle of the disk colter 8. Securely attached to the lever 12 is a screw 12A which is received in an arcuate slot 13 formed in the bracket 9. In response to the rotation of the angle adjusting lever 12, the disk colter 8 is rotated about the shaft 11 so that an angle $\alpha$ between the direction of travel and the disk colter 8 is adjustable for example from $0^{\circ}$ to $10^{\circ}$. Securely attached to the bracket 9 are nuts 14 each of which is threadably fitted over a pushing screw 15. A free end of the pushing screw 15 is made into engagement with a side surface of the lever 12 so that the inclination angle of the disk colter 8 can be maintained.

Next the mode of operation will be described. As described above, in the case of a one-way disk cultivator or one-way disk harrow, the conventional trailing wheel 5 is small in diameter and is forced to penetrate into the plowed soil, but the depth of penetration is shallow so that the supporting force $P_1$ of the trailing wheel 5 is weak. On the other hand, during plowing or harrowing, the greater thrust F is produced. As a result, as described hereinbefore, the tractor T is caused to rotate about the center of gravity G in the direction $M_1$ so that the tractor T is caused to move in the direction $S_1$. That is the lateral deviation movement of the tractor T occurs. However, according to the present invention, the disk colter 8 is disposed immediately in front of a disk 4 and penetrates

- 4 -

into an uncultivated field so that the disk colter 8 can produce the force which can cancel the thrust F. In this case, when the thrust F or the angle $\theta$ is small, the direction of the disk colter 8 is made in parallel with the direction of travel.

Assume that the supporting force of the disk colter 8 be $P_2$. Then the moment $P_2 \ell_1 + P_1 L = M_2$ which is opposite in direction to the moment $M_1$ is produced and exerted to the tractor T. When $M_1 = M_2$, the lateral deviation movement of the tractor T can be prevented so that the tractor T can move straightly in the direction S.

When the thrust force F or the angle $\theta$ is greater, the disk colter 8 is inclined at an angle $\alpha$ inwardly. Then the moment $M_2 = (P_2 + R_1)\ell_1 + P_1 L$ is produced and exerted to the tractor T in the direction opposite to the direction of the moment $M_1$. When $M_1 = M_2$, the lateral deviation movement of the tractor T can be prevented. $R_1$ is a component of the working resistance R when the disk colter 8 is inclined inwardly.

As described above, according to the present invention, the disk colter 8 is so disposed as to penetrate into an uncultivated soil in front of the disk 4 so that the supporting force $P_2$ due to the penetration of the disk colter 8 into an uncultivated soil becomes great. Furthermore, the angle of the disk colter with respect to the direction of travel is arbitrarily adjusted so that even when the thrust force F of such a one-way disk cultivator or harrow becomes excessive, the tractor T can be always steered straightly.

Reference numerals 16A and 16B designate supporting arms, respectively, which are attached to the left and right ends of the cultivator frame and are connected to the supporting frames 1B and 1C with pins 16C and 16D, respectively. The pin 16C can be detachably inserted and the supporting arm 16A is formed with a plurality of adjusting holes 16A'. Therefore, the supporting angle of the cultivator frame can be adjusted suitably by inserting the pin 16C into a suitable adjusting hole 16A'.

What is Claimed is:

1.   A device for preventing lateral deviation movement of a tractor of a one-way disk cultivator or harrow of the type having a plurality of disks attached to one axle or gang bolt at an angle with respect to a direction of travel of the tractor comprising a colter disposed in parallel with the direction of travel or at an angle opposite to the angle of inclination of said disks in front of· said disks.

2.   A device according to Claim 1 wherein said colter is angularly adjustable in response to the disk angle.

3.   A device according to Claim 2 wherein said colter is attached to a lower end of a shaft, said shaft being rotatably depending and adapted to be securely held in a desired position.

0188633

# Fig.1

0188633

# Fig. 2

# Fig.3

# Fig.4

0188633

# EUROPEAN SEARCH REPORT

European Patent Office

Application number

EP 85 10 0354

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 905 256 (NORTHCOTE)<br>* Column 3, line 63 - column 5, line 21; figures 1-5 * | 1-3 | A 01 B 5/12 |

| | | | |
|---|---|---|---|
| | | | **TECHNICAL FIELDS SEARCHED (Int. Cl.4)**<br><br>A 01 B |

The present search report has been drawn up for all claims

| Place of search | Date of completion of the search | Examiner |
|---|---|---|
| THE HAGUE | 26-06-1985 | VERDOODT S.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82